# EUROPEAN PATENT APPLICATION

(11) **EP 4 756 587 A1**
(43) Date of publication of application: **10.06.2026**
(21) Application number: 25218500.4
(22) Date of filing: 25.11.2025
(51) Int. Cl.: G06F 3/041, G06F 3/044

(54) **TOUCHSCREEN DISPLAY WITH INTEGRATED ANTENNA**

(30) Priority: 09.12.2024 US 202418973724
(71) Applicant: Cardtronics USA, Inc., Atlanta, GA 30308-1007 (US)
(72) Inventor: MITCHELL, Graeme, Dundee DD2 5RT (GB)
(74) Representative: Secerna LLP

(57) **Abstract**

A touchscreen display and an automated teller machine (ATM) are disclosed. The touchscreen display comprises an outer protective glass layer; a touch-sensitive layer configured to detect touch inputs; a display layer; and an antenna positioned between the outer protective glass layer and the touch-sensitive layer.

## Description

### FIELD

The present invention relates to a touchscreen display including an integrated antenna, and more particularly to a touchscreen display in which the integrated antenna is used for Near Field Communication (NFC) and is located within a visible region of the touch screen display.

### BACKGROUND

A touchscreen is an input device that allows users to interact with a computer or electronic device by touching the display portion of the touch screen directly. A touchscreen combines the functionality of a traditional display with that of an input device like a keyboard or mouse, making it an intuitive and interactive method of controlling devices. Touchscreens are used in a wide variety of devices, including smartphones, tablets, computers, payment terminals such as automated teller machines (ATMs) and kiosks, etc.

Near Field Communication (NFC) technology is widely used in a variety of devices such as smartphones, tablets, and payment terminals, enabling short-range wireless communication for applications such as contactless banking, payment, data transfer, and device pairing using a banking card configured for contactless NFC. Typically, NFC antennas for an NFC receiver are either placed on external surfaces of such devices or, for small devices like smartphones and tablets but not for devices with larger displays like ATMs and similar kiosks, behind the touchscreen, which limits design flexibility by taking up external surface area and, when placed behind the touchscreen, can result in interference with other components or a diminished read range the requirements set forth in the relevant standards for such devices.

Based on the foregoing, there is a need to provide an NFC antenna in a device like an ATM or similar-type kiosk having a touchscreen display larger than those used in smartphones and tablets in a way which reduces the amount of external surface area used while also reducing component interference and ensuring an appropriate read range.

According to a first aspect of the present invention there is provided a touchscreen display, comprising:
an outer protective glass layer;
a touch-sensitive layer configured to detect touch inputs;
a display layer; and
an antenna positioned between the outer protective glass layer and the touch-sensitive layer.

Aptly, wherein the antenna is configured as an NFC antenna.

Aptly, wherein the NFC antenna is configured as a coil-shaped antenna.

Aptly, wherein the NFC antenna is formed from a conductive material selected from the group consisting of tungsten, copper, aluminum, and silver.

Aptly, wherein the conductive material is a wire or metal trace.

Aptly, wherein the antenna is positioned in an active area of the touchscreen display.

Aptly, the touchscreen display further comprising an interior glass layer between the outer protective glass layer and the touch-sensitive layer.

Aptly, wherein the antenna is positioned the outer protective glass layer and the interior glass layer.

Aptly, wherein the touch-sensitive layer comprises a capacitive touch-sensitive layer formed on a glass substrate.

Aptly, wherein the display layer is an LCD display.

According to a second aspect of the present invention there is provided an automated teller machine (ATM), comprising:
a touchscreen display, comprising:
an outer protective glass layer;
a touch-sensitive layer configured to detect touch inputs;
a display layer; and
an antenna positioned between the outer protective glass layer and the touch-sensitive layer.

Aptly, wherein the antenna is configured as an NFC antenna.

Aptly, wherein the NFC antenna is configured as a coil-shaped antenna.

Aptly, wherein the NFC antenna is formed from a conductive material selected from the group consisting of tungsten, copper, aluminum, and silver.

Aptly, wherein the conductive material is a wire or metal trace.

Aptly, wherein the antenna is positioned in an active area of the touchscreen display.

Aptly, the ATM further comprising an interior glass layer between the outer protective glass layer and the touch-sensitive layer.

Aptly, wherein the antenna is positioned the outer protective glass layer and the interior glass layer.

Aptly, wherein the touch-sensitive layer comprises a capacitive touch-sensitive layer formed on a glass substrate.

Aptly, wherein the display layer is an LCD display.

### BRIEF DESCRIPTION OF THE DRAWINGS

The following detailed description, given by way of example and not intended to limit the present disclosure solely thereto, will best be understood in conjunction with the accompanying drawings in which:
FIG. 1 is a cross-sectional view of a touchscreen display incorporating an NFC antenna embedded between layers thereof according to an aspect of the present disclosure;
FIG. 2 is a plan view of the NFC antenna layout to be positioned with the touchscreen display according to an aspect of the present disclosure; and
FIG. 3 is a perspective view of the touchscreen display showing the position of the NFC antenna and the electrical connections between the NFC antenna and an associated NFC module according to an aspect of the present disclosure.

### DETAILED DESCRIPTION

In the present disclosure, like reference numbers refer to like elements throughout the drawings, which illustrate various exemplary embodiments of the present disclosure.

The present disclosure addresses the problems with prior solutions by positioning the NFC antenna within a visible area of the touchscreen display, sandwiched between an outer cover glass layer and an interior glass layer. Because the NFC antenna is formed from a conductive coil and is sandwiched between the two outermost glass layers of the touchscreen display, the resulting device reduces component interference over prior solutions in which the NFC antenna is positioned behind the display itself. In addition, this configuration provides a much better read range than prior solutions. Furthermore, placing the NFC antenna in an active display portion of the touchscreen display allows customer applications to be more interactive in the display portion surrounding the NFC antenna. For example, the customer application may generate a box around the NFC antenna on the display, with text within the box instructing a user to position their contactless banking card against the display in the space defined by the box. This provides an interactive interaction with the customer while reducing an amount of external space on the device incorporating the touchscreen display, e.g., an ATM, needed for externally facing components because no separate external module for the NFC antenna is required.

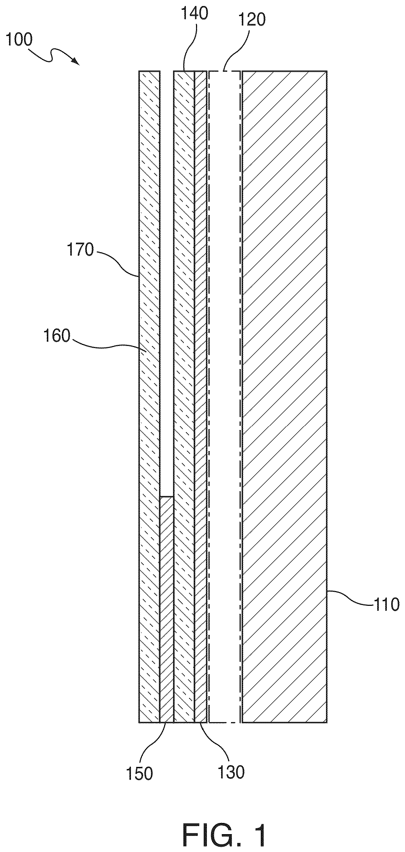

Referring now to FIG. 1, a touchscreen display 100 is shown in cross-section consisting of a series of stacked layers. The touchscreen display 100 incorporates an NFC antenna 150 positioned between an outer (cover) glass layer 160 and an interior (separation) glass layer 140. The touchscreen display 100 has outer facing side 170 of the outer glass layer 160, and a touchscreen sensor layer 130 as known in the art, an optional air gap layer 120, and an active display portion 110. The active display portion 110 may be an LCD display as known in the art. The touchscreen sensor layer 130 (or touch-sensitive layer) may be implemented as a capacitive touchscreen as known in the art. For example, the touchscreen sensor layer 130 may incorporate a capacitive touch-sensitive layer (e.g., ITO layer) formed on a glass substrate. In the alternative, other touchscreen technologies may be used to form the touchscreen sensor layer 130, including, resistive, infrared, optical, surface acoustic wave, piezoelectric, inductive, and combinations thereof.

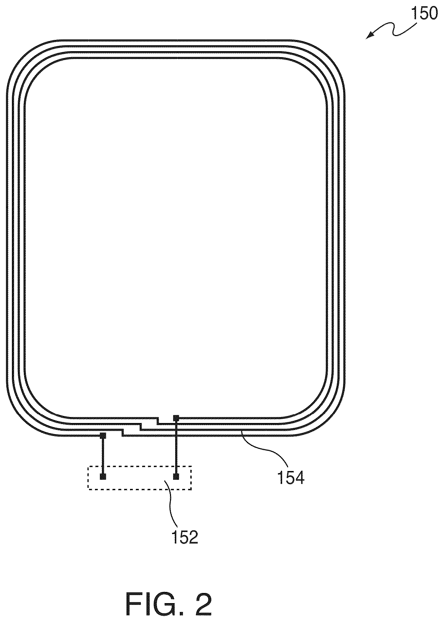

Referring now to FIG. 2, the NFC antenna 150 consists of terminals 152 connected to a conductor 154 that forms a series of loops. The conductor 154 is a conductive material such as a wire or trace have low resistance to ensure effectiveness and is preferably selected from either silver or tungsten, although copper or aluminum may provide adequate operation. NFC operates at a frequency of 13.56 MHz. The NFC antenna 154 should be designed to have a specific inductance (typically between 1 and 10 µH) to match the specifications of the selected NFC controller/reader integrated circuit. In FIG. 2, the NFC antenna 150 has four loops, but this is merely demonstrative, and the actual number of loops will depend on requirements of the selected NFC controller/reader integrated circuit, the diameter of formed loops, and the length of the conductor 154. The NFC antenna 150 may be in the form of a coil or loop to efficiently generate a magnetic field for inductive coupling with an NFC-enabled device (smart card). The NFC antenna 150 may have dimensions ranging between 30mm to 100mm in diameter, depending on the selected NFC controller/reader integrated circuit and the final shape of the coil.

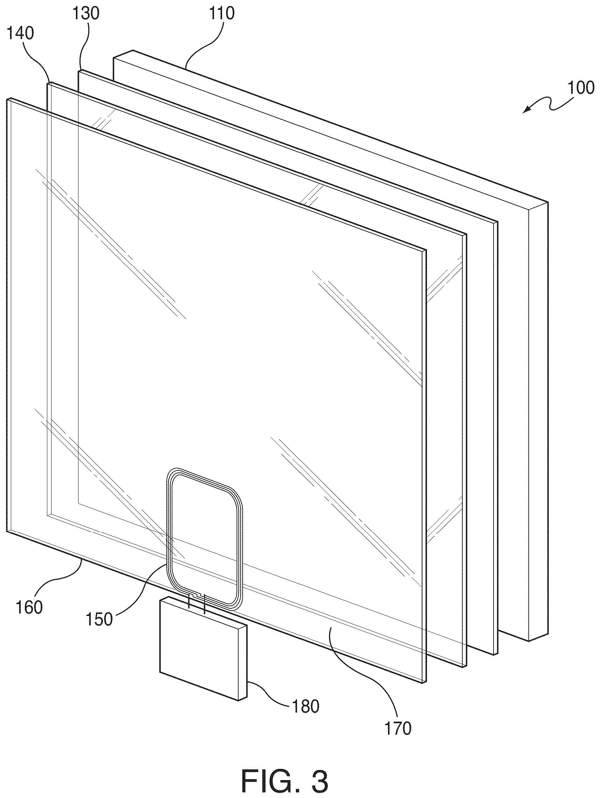

As shown in FIG. 3, the NFC antenna 150 is positioned between the outer glass panel 160 and the interior glass panel 140 that covers the touchscreen sensor layer 130. This positioning ensures that the NFC antenna 150 does not interfere with the capacitive functionality of the touchscreen display 100, which is essential for the accurate detection of touch inputs. In addition, the placement of the NFC antenna 150 may be optimized to avoid interference with the touch sensing mechanisms of the touchscreen display 100, e.g., by using proper shielding techniques. The NFC antenna 150 is electrically connected to the NFC controller/reader integrated circuit 180 which controls the NFC communication. This electrical connection may be established through flexible printed circuit board (PCB) tracks or via holes provided within the glass layers of the touchscreen display 100. The NFC antenna 150 is wired in such a way to ensure that the signals can be sent and received the touch sensitivity of the touchscreen display 100.

To ensure that the NFC antenna 150 does not interfere with the capacitive sensing of the touchscreen display 100, appropriate shielding is preferably used around the NFC antenna 150. This shielding may be provided by either a conductive layer in the touchscreen stack or by careful placement of the antenna to avoid direct overlap with the active touch-sensitive areas.

The touchscreen display 100 of the present disclosure provides a number of advantages over prior solutions. Significant space savings are provided because the NFC antenna 150 is embedded within the touchscreen display 100 itself, eliminating the need for additional external components and thus freeing up external space on the outer surface of the associated device, e.g., on the front fascia of an ATM. In addition, by embedding the NFC antenna 150 within the touchscreen display 100, the overall design of the associated device (e.g., ATM) remains sleek and minimalistic without visible external antenna modules. Further, the placement of the NFC antenna 150 within the touchscreen display 100 ensures that NFC signals can be transmitted effectively while maintaining the integrity of the capacitive sensing of the touchscreen display 100. Finally, integrating the NFC antenna 150 directly into the touchscreen panel reduces the number of components and simplifies the assembly process, potentially lowering manufacturing costs.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A touchscreen display, comprising:
an outer protective glass layer;
a touch-sensitive layer configured to detect touch inputs;
a display layer; and
an antenna positioned between the outer protective glass layer and the touch-sensitive layer.

2. The touchscreen display of claim 1, wherein the antenna is configured as an NFC antenna.

3. The touchscreen display of claim 2, wherein the NFC antenna is configured as a coil-shaped antenna.

4. The touchscreen display of claim 2 or claim 3, wherein the NFC antenna is formed from a conductive material selected from the group consisting of tungsten, copper, aluminum, and silver; and optionally
wherein the conductive material is a wire or metal trace.

5. The touchscreen display of any preceding claim, wherein the antenna is positioned in an active area of the touchscreen display.

6. The touchscreen display of any preceding claim, further comprising an interior glass layer between the outer protective glass layer and the touch-sensitive layer; and optionally
wherein the antenna is positioned between the outer protective glass layer and the interior glass layer.

7. The touchscreen display of any preceding claim, wherein the touch-sensitive layer comprises a capacitive touch-sensitive layer formed on a glass substrate; and/or
wherein the display layer is an LCD display.

8. An automated teller machine (ATM), comprising:
a touchscreen display, comprising:
an outer protective glass layer;
a touch-sensitive layer configured to detect touch inputs;
a display layer; and
an antenna positioned between the outer protective glass layer and the touch-sensitive layer.

9. The ATM of claim 8, wherein the antenna is configured as an NFC antenna.

10. The ATM of claim 8 or claim 9, wherein the NFC antenna is configured as a coil-shaped antenna.

11. The ATM of claim 9 or claim 10, wherein the NFC antenna is formed from a conductive material selected from the group consisting of tungsten, copper, aluminum, and silver; and optionally
wherein the conductive material is a wire or metal trace.

12. The ATM of any one of claims 8 to 11, wherein the antenna is positioned in an active area of the touchscreen display.

13. The ATM of any one of claims 8 to 12, further comprising an interior glass layer between the outer protective glass layer and the touch-sensitive layer; and optionally
wherein the antenna is positioned between the outer protective glass layer and the interior glass layer.

14. The ATM of any one of claims 8 to 13, wherein the touch-sensitive layer comprises a capacitive touch-sensitive layer formed on a glass substrate.

15. The ATM of any one of claims 8 to 14, wherein the display layer is an LCD display.
